**Europäisches Patentamt**

**European Patent Office**

**Office européen des brevets**

(19)

(11) Veröffentlichungsnummer : **0 057 361**
**B1**

(12) **EUROPÄISCHE PATENTSCHRIFT**

(45) Veröffentlichungstag der Patentschrift :
02.01.86

(21) Anmeldenummer : **82100290.4**

(22) Anmeldetag : **16.01.82**

(51) Int. Cl.⁴ : **B 63 B 25/00**, B 63 B 25/28//
B60P7/13

(54) **Einschub-Stauelement für die Containerbefestigung.**

(30) Priorität : **22.01.81 DE 8101529 U**

(43) Veröffentlichungstag der Anmeldung :
**11.08.82 Patentblatt 82/32**

(45) Bekanntmachung des Hinweises auf die Patenterteilung : **02.01.86 Patentblatt 86/01**

(84) Benannte Vertragsstaaten :
**BE DE FR GB IT NL SE**

(56) Entgegenhaltungen :
**DE-A- 1 481 368**
**DE-A- 2 613 465**
**US-A- 3 765 637**
**US-A- 3 860 209**

(73) Patentinhaber : **Borchardt, Dieter**
**Rissener Dorfstrasse 45**
**D-2000 Hamburg 56 (DE)**

(72) Erfinder : **Borchardt, Dieter**
**Rissener Dorfstrasse 45**
**D-2000 Hamburg 56 (DE)**

(74) Vertreter : **UEXKÜLL & STOLBERG Patentanwälte**
**Beselerstrasse 4**
**D-2000 Hamburg 52 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 057 361 B1

## Beschreibung

Die Erfindung betrifft ein Einschub-Stauelement für die Containerbefestigung, vorzugsweise auf Schiffen, mit einem mit dem Schiffskörper verschweißten, plattenförmigen Fundament mit zwei ersten Keilführungsflächen zum Einschieben eines Staustücks, das mit zwei entsprechend geformten Keilführungsflächen versehen ist und in vollständig eingeschobenem Zustand an einer Rückwand des Fundaments anliegt.

Derartige Stauelemente sind bereits seit geraumer Zeit bekannt (Katalog der Ozean Service + Reparatur GmbH. S. 33), wobei das Fundament üblicherweise plattenförmig ist und schwalbenschwanzartige Keilführungsflächen aufweist, die an einem Ende des Fundaments offen, am gegenüberliegenden anderen Ende jedoch durch eine Rückwand verschlossen sind. Die bekannten Fundamente werden vorzugsweise auf einem Schiffsdeck oder einem Lukendeckel eines Schiffes angeschweißt und dienen zum Einschieben von ebenfalls bekannten Staustücken. Hierzu weisen die Staustücke eine Basisplatte mit gegenüberliegenden, parallel verlaufenden Keilführungsflächen auf, die entsprechend den Keilführungsflächen des Fundaments abgeschrägt sind. Auf der Oberseite der Basisplatte setzt ein bekannter Staukonus oder ein Twistlock-Konus (US-A-3 860 209) an, die zum Eingriff in eine Öffnung einer genormten Containerecke dienen. Das bekannte Stauelement wird zum Stauen von Containern seitlich in die Keilführungen des Fundaments eingeschoben, während sie ohne Containerbeladung zur Erzielung eines möglichst glatten Decks oder einer ebenfalls glatten Luke aus dem Fundament gezogen werden.

Ein Nachteil der bekannten Einschub-Stauelemente liegt darin, daß trotz der geringen Bauhöhe der Fundamente kein vollständig glattes Deck erzielbar ist. Es bleiben vielmehr nach dem Entnehmen der Staustücke eine große Anzahl von Fundamenten auf dem Deck oder der Luke zurück, die an denjenigen Stellen angeschweißt sind, an denen die vier Ecken eines 20' bzw. eines 40' Containers abgesetzt werden sollen.

Zur Erzielung eines ebenen Decks oder eines ebenen Lukendeckels, auf dem anderes Stückgut ohne Zwischenraum abstellbar ist, ist es auch denkbar, die Fundamente vertieft in Wannen in das Deck oder den Lukendeckel eingeschweißt anzuordnen. Schwierigkeiten ergeben sich dabei durch die große Baulänge der Fundamentwanne, die bei dem bekannten Einschub-Stauelementen mindestens so lang wie die Länge des bekannten Fundaments plus die Länge des Staustücks sein muß, um ein seitliches Einschieben des Staustücks in das Fundament zu gestatten.

Es ist daher Aufgabe der Erfindung, das bekannte Einschub-Stauelement bestehend aus Fundament und Staustück derart weiterzubilden, daß das Fundament auch in eine kürzere Wanne als beim Stand der Technik eingeschweißt bzw. als kürzere Wanne geformt werden kann.

Zur Lösung dieser Aufgabe dient ein Einschub-Stauelement der eingangs erwähnten Art, welches dadurch gekennzeichnet ist, daß in mindestens einer ersten Keilführungsfläche des Fundaments mindestens eine erste Einsetzlücke vorgesehen ist, und wobei das Staustück an entsprechender Stelle in mindestens einer zweiten Keilführungsfläche ebenfalls mindestens eine zweite Einsetzlücke aufweist, so daß das Staustück von oben in das Fundament einsetzbar ist.

Dadurch wird erreicht, daß das Staustück in einer Art Verzahnung in das Fundament einsetzbar ist, wobei die maximale Länge von Fundament und verzahnt in das Fundament eingesetztem Staustück geringer als beim Stand der Technik ist. Es lassen sich somit kürzere Fundamentwannen als bislang in das Schiffsdeck, in den Lukendeckel oder in eine Seitenwand des Laderaumes einschweißen.

Obgleich eine schwalbenschwanzförmige Anordnung von Keilführungsflächen im Fundament üblich ist, bei denen die Oberkanten der Keilführungsflächen einen kleineren Abstand als die Unterkanten haben, sind auch umgekehrt geformte Keilführungen denkbar, bei denen das Staustück demnach nicht in das Fundament eingeschoben wird, sondern über letzteres greift.

Durch das Vorsehen von Einsetzlücken im Fundament, und zwar in einer Ausführung lediglich in einer Keilführungsfläche, in einer anderen Ausführung hingegen in beiden Keilführungsflächen, sind zahlreiche Kombinationen mit dem ebenfalls Einsetzlücken aufweisenden Stauelement möglich, die alle von dem Prinzip eines verzahnten Einsetzens Gebrauch machen.

Vorzugsweise ist eine erste Einsetzlücke in einer Keilführungsfläche des Fundaments vorhanden, so daß ein Staustück mit entsprechend geformter Einsetzlücke in einer oder in beiden Keilführungsflächen derart einsetzbar ist, daß dieses zunächst von oben unter die durchgehende Keilführungsfläche des Fundaments geschoben und dann in die Einsetzlücke der gegenüberliegenden Keilführungsfläche abgesenkt wird. Hierauf ist ein vollständiges Einschieben bis zum Anliegen an der Rückwand des Fundaments möglich.

In einer anderen Ausführung sind in beiden Keilführungsflächen des Fundaments Einsetzlücken vorgesehen, wobei sich ein Stauelement mit entsprechend geformten Einsetzlücken parallel zum Fundament von oben absenken und nach dem Aufliegen an die Rückwand schieben läßt.

Gemäß einer besonders bevorzugten Ausführung der Erfindung haben die Einsetzlücken im Fundament und im Staustück die gleiche Breite wie die nicht unterbrochen, tragenden Flankenabschnitte, so daß sich im Falle einer einzigen Einsetzlücke in einer Keilführungsfläche eine Drittelteilung ergibt.

Sind hingegen in einer Keilführungsfläche zwei Einsetzlücken und zwei tragenden Flankenteile vorgesehen, so kann eine Viertelteilung zweckmäßig sein.

Gemäß einer Weiterbildung der Erfindung haben die Einsetzlücken bezüglich der tragenden Flankenteile der Keilführungsflächen unterschiedliche Breite, wobei jedoch zu beachten ist, daß die Breite der Einsetzlücken im Fundament größer sein muß als die an dieser Stelle einzusetzenden, tragenden Flankenteile des Staustücks.

In einer anderen Ausführung der Erfindung sind die Einsetzlücken an den Enden der Keilführungsflächen vorgesehen, während die tragenden Flankenteile in der Mitte der Keilführungsflächen angeordnet sind. Eine derartige Ausführung ist dann zweckmäßig, wenn die Hauptbeanspruchung des Staustücks in der Mittelebene erfolgt und gleichzeitig eine möglichst lange Parallelführung erwünscht ist, die in der Ebene der Bodenfläche des Fundaments wirkende Kräfte auffangen soll.

Eine Verkürzung der Baulänge von Fundament und Staustück läßt sich auch dadurch erreichen, daß nur an einem Ende des Staustücks, und zwar in einer oder in beiden Keilführungsflächen Einsetzlücken vorgesehen sind. Die entsprechenden Keilführungen brauchen dabei im Fundament nicht bis zur Rückwand geformt sein, sondern können entsprechend der Länge der Einsetzlücken am Staustück im Abstand vor der Fundament-Rückwand enden.

Es wird darauf hingewiesen, daß die Breite der Einsetzlücken bzw. der tragenden Flankenabschnitte in Längsrichtung der Keilführungsflächen gemessen wird.

Es ist klar, daß auf der Basisplatte des Staustücks anstelle eines Staukonus oder eines Twistlock-Konus auch andere Verbindungselemente, beispielsweise ein Zurrauge oder eine Distanzplatte o. ä. angeordnet sein können.

Es ist dem Fachmann ebenfalls klar, daß die Rückwand des Fundaments nicht durchgehend zu sein braucht, sondern daß auch ein Anschlag bzw. Stopper zur Begrenzung der Einschubbewegung des Staustücks ausreicht. Um im Falle von versenkten Fundamenten Wasser abfließen zu lassen, ist es zweckmäßig, die Rückwand bzw. die der Rückwand gegenüberliegende Wannenwand nach außen geneigt auszubilden, damit Wasser während der Rollbewegung des Schiffes austreten kann.

Weitere vorteilhafte Ausgestaltungen der Erfindung ergeben sich für den Fachmann ohne Schwierigkeiten aus der nachfolgenden Figurenbeschreibung sowie aus den Unteransprüchen, wobei allen Ausführungen gemeinsam ist, daß das Staustück zunächst von oben in das Fundament eingesetzt und anschließend bis zur Rückwand des Fundaments eingeschoben wird.

Die Erfindung wird im folgenden anhand von Figuren näher erläutert ; es zeigen :

Figur 1   ein Staustück ;

Figur 2   ein Fundament ; und

Figur 3   ein Einschub-Stauelement mit in das Fundament gemäß Figur 2 eingesetztem Staustück gemäß Figur 1.

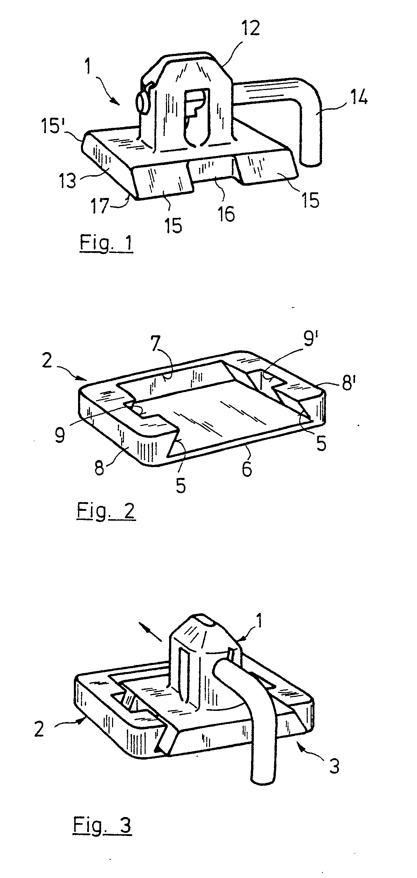

Das in Figur 1 dargestellte Staustück weist eine Basisplatte 13 auf, die mit Keilführungsflächen 15, 15' versehen ist. In dem dargestellten Ausführungsbeispiel verlaufen die Keilführungsflächen 15, 15' an gegenüberliegenden Seiten der Basisplatte 13 parallel zueinander und schließen mit der Unterseite 17 der Basisplatte 13 einen spitzen Winkel ein. Auf der Oberseite der Basisplatte 13 ist ein Staukonus 12 angeformt, der zum Eingriff in eine Öffnung einer nicht dargestellten, genormten Containerecke dient. Zur Verriegelung der Containerecke dient ein Verriegelungsbolzen 14, der sich in Richtung der langen Achse des Staukonus 12 erstreckt. In der Keilführungsfläche 15 ist eine Einsetzlücke 16 vorgesehen, die vorzugsweise in der Mitte der Keilführungsfläche 15 liegt und die gleiche Breite wie die verbleibenden, tragenden Flankenabschnitte der Keilführungsfläche 15 hat. In der anderen, in Figur 1 nicht erkennbaren Keilführungsfläche 15' ist ebenfalls eine Einsetzlücke vorgesehen, die der erkennbaren Einsetzlücke 16 gegenüberliegt.

Figur 2 zeigt ein Fundament 2 zum Einschieben eines Staustücks 1, das gegenüber Figur 1 um 90° gedreht einzuschieben ist. Das Fundament 2 weist eine Bodenfläche 6 auf, an die an einem Ende eine Rückwand 7 anschließt. Die Rückwand 7 geht in Seitenwände 8 und 8' über. In den von den Seitenwänden 8 und 8' begrenzten Flanken des Fundaments 2 sind erste Keilführungsflächen 5 und 5' vorgesehen, die bezüglich der zweiten Keilführungsflächen 15, 15' des Staustücks 1 komplementär geformt sind. Die ersten Keilführungsflächen 5 bilden somit eine Schwalbenschwanzführung in die das Staustück 1 von der Seite, und zwar in Richtung des Pfeils in Figur 3 einschiebbar ist.

In den ersten Keilführungsflächen 5 bzw. 5' sind erste Einsetzlücken 9 bzw. 9' gegenüberliegend angeordnet, die in der dargestellten Ausführung die gleiche Breite wie die verbleibenden tragenden Flankenabschnitte der Keilführungsflächen 5,5' haben. Die Breite der ersten Einsetzlücken 9, 9' ist geringfügig größer als die Breite der tragenden vorderen Flankenabschnitte des Staustücks 1, so daß dieses mit seinen tragenden Flankenabschnitten von oben in die Einsetzlücken 9, 9' in das Fundament 2 einsetzbar ist.

Figur 3 zeigt das in das Fundament 2 auf die zuvor erwähnte Weise verzahnt eingesetzte Staustück 1, das noch nicht vollständig bis an die Rückwand 7 des Fundaments 2 eingeschoben ist, um ein Einschub-Stauelement 3 zu bilden.

Nach dem kombinierten, verzahnten Einsetzen und Einschieben des Staustücks 1 in das Fundament 2 wird bei dem bekannten Staustück der Verriegelungsbolzen 14 aus dem Staukonus 12 gezogen, so daß eine Containerecke über den Staukonus 12 gesetzt werden kann. Anschließend wird durch eine Öffnung der genormten Containerecke der Verriegelungsbolzen 14 wieder durch den Staukonus 12 gesteckt, so daß die nicht dargestellte Containerecke gesichert ist.

Es ist klar, daß anstelle eines festen Staukonus auch jeder andere geeignete Staukonus, beispielsweise ein Twist-lock-Konus mit entsprechender Basisplatte und Keilführungen in das Fundament in der kombinierten Weise eingesetzt und eingeschoben werden kann.

Es ist dem Fachmann ebenfalls klar, daß das Fundament überall dort in einer Schiffswand, einem Schiffsdeck oder einem Lukendeckel in einer Wanne oder bereits als Wanne geformt unterbringbar ist, wo Befestigungspunkte für Containerecken vorgesehen sein sollen. Wird das Fundament 2 beispielsweise in einer Schiffsseitenwand vorgesehen, so wird es zweckmäßigerweise mit der Rückwand 7 nach unten montiert, damit das Staustück 1 von oben einsetzbar und nach unten absenkbar ist. Ein Herausfallen des Staustücks 1 aus dem Fundament 2 wird dadurch verhindert.

Es wird ferner darauf hingewiesen, daß das verzahnte Einsetzen des Staustücks in das Fundament auch dann durchführbar ist, wenn keine schwalbenschwanzförmigen Keilführungsflächen vorliegen, sondern eine auf andere Weise hergestellte formschlüssige Verbindung, beispielsweise mit senkrechten Keilführungsflächen vorgesehen ist.

In einer besonders zweckmäßigen Ausgestaltung der Erfindung sind Verriegelungsstücke vorgesehen, die in den Figuren nicht dargestellt sind. Diese Verriegelungsstücke werden nach dem vollständigen Einschieben des Staustücks 1 in das Fundament 2 von oben in die Einsetzlücken 9, 9' und 16 eingesetzt, so daß das Staustück 1 im Fundament 2 verriegelt ist. Bei rechtwinkeligen Einsetzlücken 9, 9' bzw. 16 können die Verriegelungsstücke im wesentlichen quaderförmig sein. Bei in der Draufsicht trapezförmigen Einsetzlücken sind sowohl quaderförmige als auch in der Draufsicht trapezförmig prismatische Körper als Verriegelungsstücke geeignet. Die Verriegelungsstücke können getrennt vom Fundament aufbewahrt sein oder über eine Gelenkverbindung am Fundament hängen, wobei sie im letzteren Fall in die Einsetzlücken schwenkbar sind. Es ist dem Fachmann klar, welche Formgebung und Anbringung für derartige Verriegelungsstücke zu wählen ist.

## Patentansprüche

1. Einschub-Stauelement für die Containerbefestigung, insbesondere auf Schiffen, mit einem mit dem Schiffskörper verschweißten, plattenförmigen Fundament (2) mit zwei ersten Keilführungsflächen (5) zum Einschieben eines Staustücks (1), das mit zwei entsprechend geformten zweiten Keilführungsflächen (15) versehen ist und in vollständig eingeschobenem Zustand an einer Rückwand (7) des Fundaments (2) anliegt, dadurch gekennzeichnet, daß in mindestens einer ersten Keilführungsfläche (5) des Fundaments (2) mindestens eine erste Einsetzlücke (9) vorgesehen ist und daß das Staustück (1) an entsprechender Stelle in mindestens einer zweiten Keilführungsfläche (15) ebenfalls mindestens eine zweite Einsetzlücke (16) aufweist, so daß das Staustück (1) von oben in das Fundament (2) einsetzbar ist.

2. Stauelement nach Anspruch 1, dadurch gekennzeichnet, daß die erste Einsetzlücke (9) in der Mitte der ersten Keilführungsfläche (5) des Fundaments (2) und die zweite Einsetzlücke (16) in der Mitte der zweiten Keilführungsfläche (15) des Staustücks (1) angeordnet ist.

3. Stauelement nach Anspruch 2, dadurch gekennzeichnet, daß die tragenden Flankenabschnitte der ersten bzw. zweiten Keilführungsflächen (5 bzw. 15) gleich breit sind wie die ersten bzw. zweite Einsetzlücke (9 bzw. 16).

4. Stauelement nach Anspruch 3, dadurch gekennzeichnet, daß die ersten bzw. zweiten Einsetzlücken (9 bzw. 16) andere Breiten als die tragenden Flankenabschnitte der ersten bzw. zweiten Keilführungsflächen haben.

5. Stauelement nach Anspruch 1, dadurch gekennzeichnet, daß die erste Einsetzlücke (9) an dem der Rückwand (7) gegenüberliegenden Ende der ersten Keilführungsfläche (5) des Fundaments (2) vorgesehen ist.

6. Stauelement nach Anspruch 1, dadurch gekennzeichnet, daß die zweite Einsetzlücke (16) nur an einem Ende der zweiten Keilführungsfläche (15) des Staustücks (1) vorgesehen ist.

7. Stauelement nach Anspruch 1, dadurch gekennzeichnet, daß die ersten bzw. zweiten Einsetzlücken (9 bzw. 16) an beiden Enden der ersten bzw. zweiten Keilführungsflächen (5 bzw. 15) vorgesehen sind.

8. Stauelement nach einem der Ansprüche 1 bis 7, dadurch gekennzeichnet, daß die ersten bzw. zweiten Einsetzlücken (9 bzw. 16) nur in jeweils einer ersten bzw. zweiten Keilführungsfläche (5 bzw. 15) vorgesehen sind.

9. Stauelement nach einem der Ansprüche 1 bis 7, dadurch gekennzeichnet, daß die ersten bzw. zweiten Einsetzlücken (9 bzw. 16) in beiden ersten bzw. zweiten Keilführungsflächen (5 bzw. 15) vorgesehen sind.

10. Stauelement nach einem der Ansprüche 1 bis 9, dadurch gekennzeichnet, daß das Fundament (2) als Wanne mit der Rückwand (7) gegenüberliegender Vorderwand geformt ist, wobei die ersten Keilführungsflächen (5) im Abstand von der Vorderwand enden.

11. Fundament (2) für ein Staustück zur Befestigung von Containern, insbesondere auf Schiffen, mit einer Bodenfläche (6), einer Rückwand (7) und mit Seitenwänden (8, 8'), in denen zwei erste Keilführungsflächen (5) zum Einschieben und Verankern eines Staustücks vorgesehen sind, das entsprechende zweite Keilführungsflächen (15) aufweist, dadurch gekennzeichnet, daß in mindestens einer ersten Keilführungsfläche (5) mindestens eine Einsetzlücke (9, 9') vorgesehen ist.

12. Staustück (1) für die Containerbefestigung, insbesondere auf Schiffen, mit einem von einer Basisplatte (13) hochstehenden Staukonus (12) und mit mindestens einer Keilführungsfläche (15) an der Basisplatte (13) zum Einschieben und Verankern des Staustücks (1) in einem Fundament (2) mit entsprechenden Keilführungsflächen (5), dadurch gekennzeichnet, daß in der Keilführungsfläche (15) des Staustücks eine Einsetzlücke (16) vorgesehen ist.

## Claims

1. A slide-in stowage member for fastening containers, in particular onto ships, having a slab-shaped base (2) which is welded to the hull of the ship and which has two first wedge guide faces (5) for sliding in a stowage-piece (1) which is provided with two correspondingly shaped second wedge guide faces (15) and in the completely slid-in state rests against a rear wall (7) of the base (2), characterized in that in at least one first wedge guide face (5) of the base (2) at least one first insertion-gap (9) is provided and that the stowage-piece (1) at a corresponding point in at least one second wedge guide face (15) exhibits likewise at least one second insertion-gap (16) so that the stowage piece (1) may be inserted from above into the base (2).

2. A stowage member as in Claim 1, characterized in that the first insertion-gap (9) is arranged in the centre of the first wedge guide face (5) of the base (2) and the second insertion-gap (16) is arranged in the centre of the second wedge guide face (15) of the stowage-piece (1).

3. A stowage member as in Claim 2, characterized in that the bearing flank sections of the first and second wedge guide faces respectively (5 and 15 resp.) are of the same width as the first and second insertion-gaps respectively (9 and 16 resp.).

4. A stowage member as in Claim 3, characterized in that the first and second insertion-gaps respectively (9 and 16 resp.) have other widths than the bearing flank sections of the first and second wedge guide faces respectively.

5. A stowage member as in Claim 1, characterized in that the first insertion-gap (9) is provided at that end of the first wedge guide face (5) of the base (2) which is remote from the rear wall (7).

6. A stowage member as in Claim 1, characterized in that the second insertion-gap (16) is provided at only one end of the second wedge guide face (15) of the stowage-piece (1).

7. A stowage member as in Claim 1, characterized in that the first and second insertion-gaps respectively (9 and 16 resp.) are provided at both ends of the first and second wedge guide faces respectively (5 and 15 resp.).

8. A stowage member as in one of the Claims 1 to 7, characterized in that the first and second insertion-gaps respectively (9 and 16 resp.) are provided in only one first or second wedge guide face (5 or 15) at a time.

9. A stowage member as in one of the Claims 1 to 7, characterized in that the first and second insertion-gaps respectively (9 and 16 resp.) are provided in both first and second wedge guide faces respectively (5 and 15 resp.).

10. A stowage member as in one of the Claims 1 to 9, characterized in that the base (2) is shaped as a tub having a front wall lying opposite the rear wall (7), with the first wedge guide faces (5) ending at a distance from the front wall.

11. A base (2) for a stowage-piece for the fastening of containers, in particular onto ships, having a bottom face (6), a rear wall (7) and sidewalls (8, 8') in which are provided two first wedge guide faces (5) for sliding in and anchoring a stowage-piece which exhibits corresponding second wedge guide faces (15), characterized in that in at least one first wedge guide face (5) at least one insertion-gap (9, 9') is provided.

12. A stowage-piece (1) for fastening containers, in particular onto ships, having a stowage-cone (12) standing up from a baseplate (13) and having at least one wedge guide face (15) on the baseplate (13) for sliding in and anchoring of the stowage-piece (1) into a base (2) having corresponding wedge guide faces (5), characterized in that in the wedge guide face (15) of the stowage-piece an insertion-gap (16) is provided.

## Revendications

1. Elément d'amarrage à emboîtement pour la fixation d'un conteneur, de préférence sur des navires, comportant un socle (2) en forme de plaque, soudé sur le corps du navire et présentant deux premières surfaces de guidage en coin (5) servant à l'emboîtement d'une pièce d'amarrage (1) qui est munie de deux secondes surfaces de guidage en coin (15) conformées de façon correspondante, et qui, dans l'état entièrement emboîté, s'appuie sur une paroi arrière (7) du socle (2), caractérisé en ce qu'il est prévu dans au moins une des premières surfaces de guidage en coin (5) du socle (2), au moins une première brèche de mise en place (9), et en ce que la pièce d'amarrage (1) comporte également au moins une deuxième brèche de mise en place (16) dans au moins l'une des secondes surfaces de guidage en coin (15) et en un emplacement correspondant, si bien que la pièce d'amarrage (1) peut être mise en place par en haut dans le socle (2).

2. Elément d'amarrage selon la revendication 1, caractérisé en ce que la première brèche de mise en place (9) est disposée dans le milieu de la première surface de guidage en coin (5) du socle (2) et la seconde brèche de mise en place (16) dans le milieu de la seconde surface de guidage en coin (15) de la pièce d'amarrage (1).

3. Elément d'amarrage selon la revendication 2, caractérisé en ce que les tronçons de flanc porteurs des première et seconde surfaces de guidage en coin (5 ou 15) ont la même largeur que les première ou seconde brèches de mise en place (9 ou 16).

4. Elément d'amarrage selon la revendication 3, caractérisé en ce que les première et seconde brèches de mise en place (9 ou 16) ont d'autres largeurs que les tronçons de flanc porteurs des première ou seconde surfaces de guidage en coin.

5. Elément d'amarrage selon la revendication 1, caractérisé en ce que la première brèche de mise en place (9) est prévue sur l'extrémité de la première surface de guidage en coin (5) du socle (2) qui est située à l'opposé de la paroi arrière (7).

6. Elément d'amarrage selon la revendication 1, caractérisé en ce que la seconde brèche de mise en place (16) n'est prévue qu'à une extrémité de la seconde surface de guidage en coin (15) de la pièce d'amarrage (1).

7. Elément d'amarrage selon la revendication 1, caractérisé en ce que les première ou seconde brèches de mise en place (9 ou 16) sont prévues sur les deux extrémités des première ou seconde surfaces de guidage en coin (5 ou 15).

8. Elément d'amarrage selon l'une des revendications 1 à 7, caractérisé en ce que les première ou seconde brèches de mise en place (9 ou 16) ne sont prévues que dans à chaque fois une première ou une seconde surface de guidage en coin (5 ou 15).

9. Elément d'amarrage selon l'une des revendications 1 à 7, caractérisé en ce que les première ou seconde brèches de mise en place (9 ou 16) sont prévues dans l'une et l'autre des première ou seconde surfaces de guidage en coin (5 ou 15).

10. Elément d'amarrage selon l'une des revendications 1 à 9, caractérisé en ce que le socle (2) est conformé en cuvette avec une paroi antérieure opposée à la paroi arrière (7), les premières surfaces de guidage en coin (5) se terminant à distance de la paroi antérieure.

11. Socle (2) pour une pièce d'amarrage en vue de la fixation de conteneurs, notamment sur des navires, comportant une surface de fond (6), une paroi arrière (7) et des parois latérales (8, 8') dans lesquelles sont prévues deux premières surfaces de guidage en coin (5) pour l'emboîtement et l'ancrage d'une pièce d'amarrage qui présente deux surfaces de guidage en coin (15) correspondantes, caractérisé en ce qu'il est prévu, dans au moins une première surface de guidage en coin (5), au moins une brèche de mise en place (9, 9').

12. Pièce d'amarrage (1) pour la fixation d'un conteneur, notamment sur des navires, comportant un cône d'amarrage (12) surélevé par rapport à une plaque de base (13) et au moins une surface de guidage en coin (15) prévue sur la plaque de base (13) pour l'emboîtement et l'ancrage de la pièce d'amarrage (1) dans un socle (2) présentant des surfaces de guidage en coin (5) correspondantes, caractérisée en ce qu'il est prévu, dans la surface de guidage en coin (15) de la pièce d'amarrage, une brèche de mise en place (16).

Fig. 1

Fig. 2

Fig. 3

1